# EUROPÄISCHE PATENTSCHRIFT

(11) **EP 2 450 165 B1**
(45) Veröffentlichungstag und Bekanntmachung des Hinweises auf die Patenterteilung: **10.01.2018**
(21) Anmeldenummer: 11008770.7
(22) Anmeldetag: 03.11.2011
(51) Int. Cl.: B29L 31/30, B29C 65/00, B26D 7/01, B26D 7/18, B26F 1/44, B29C 65/78, B26F 1/02, B29C 65/08, B26D 7/06, B26D 7/02

(54) **Vorrichtung zum Bearbeiten, insbesondere zum Stanzen und Verbinden eines Werkstücks**
Device for working a workpiece, in particular for punching and connecting a workpiece
Dispositif de traitement, notamment pour estampiller et relier une pièce d'oeuvre

(30) Priorität: 03.11.2010 EP 10014231; 03.11.2010 DE 202010014913 U
(43) Veröffentlichungstag der Anmeldung: 09.05.2012
(73) Patentinhaber: Sonotronic Nagel GmbH, 76307 Karlsbad (DE)
(72) Erfinder: Nagel, Dieter, 76307 Karlsbad (DE); Nagel, Ingo, 76307 Karlsbad (DE)
(74) Vertreter: Weickmann & Weickmann PartmbB

(56) Entgegenhaltungen:
- EP-A1- 1 798 019
- EP-A2- 1 586 427
- DE-A1-102009 019 644

## Beschreibung

Die Erfindung betrifft ein Bearbeitungswerkzeug für eine Vorrichtung zum Bearbeiten, insbesondere zum Stanzen und Verbinden, eines Werkstücks, insbesondere von Kunststoffteilen für Kraftfahrzeuge, wobei die Vorrichtung ein Oberwerkzeug und das Bearbeitungswerkzeug ein Unterwerkzeug mit mindestens zwei Bearbeitungseinheiten besitzt, die zum Oberwerkzeug hin- und von diesem wegbewegbar sind, wobei das Unterwerkzeug mindestens eine Bewegungseinrichtung aufweist, durch welche mindestens die erste Bearbeitungseinheit und die zweite Bearbeitungseinheit wahlweise relativ zum Oberwerkzeug des Bearbeitungswerkzeugs bewegbar sind, wobei mindestens eine Bewegungseinrichtung einen Schlitten aufweist, auf dessen Schlittentisch mindestens eine Bearbeitungseinheit angeordnet ist, und wobei der Schlittentisch des Schlittens auf einer Schlittenführung verschiebbar angeordnet ist,

Ein derartiges Bearbeitungswerkzeug ist aus der EP 1 798 019 bekannt, In der Druckschrift ist eine Vorrichtung zum nacheinanderfolgenden Durchführen von Stanz- und Fräs-, Schweiß- und/oder Klebearbeiten an großflächigen, dreidimensionalen Kunststoffteilen für Kraftfahrzeuge, insbesondere von Stoßfängern, beschrieben, die wenigstens eine Aufnahme für die Kunststoffteile sowie ein Unterwerkzeug und ein Oberwerkzeug besitzt. Das Unterwerkzeug und das Oberwerkzeug weisen ihrerseits Werkzeuge auf, die zumindest teilweise parallel bzw. in Richtung einer vorgegebenen Achse beweglich gelagert sind und dazu dienen, die Kunststoffteile zunächst mit einem Stanzloch zu versehen und dann im Bereich des Stanzlochs wenigstens einen weiteren Bearbeitungsschritt durch Fräsen, Schweißen und/oder Kleben auszuführen. Die Aufnahme ist stationär angeordnet und die Werkzeuge des Unter- oder Oberwerkzeugs sind an einer quer zu der Achse beweglich gelagerten Halterung montiert. Die an ihr montierten Werkzeuge sind nacheinander in eine Bearbeitungsstellung bringbar, die durch eine vorgegebene Bearbeitungsstelle der Kunststoffteile festgelegt ist. Hierzu ist vorgesehen, dass das Oberwerkzeug und das Unterwerkzeug an einem Bügel mit rechteckigem oder quadratischem Querschnitt befestigt sind, wobei das Unterwerkzeug auf einer Halterung relativ zum Bügel sowie zur Aufnahme verschiebbar gelagert ist. Auf dieser Halterung ist ein erstes Werkzeug in Form einer für den Stanzvorgang benötigten Matrize montiert. Weiterhin ist eine mit dem Bügel verbundene Führungsbahn vorgesehen, längs derer die Halterung verschiebbar ist. Die Führung ist schräg angeordnet, so dass die Halterung gegenüber dem zu bearbeitenden Werkstück abgesenkt werden kann, so dass das Werkzeug nach unten aus dem Werkstück herausgefahren werden kann. Zum Verschieben der Halterung dient eine Zylinder/Kolben-Anordnung, deren Kolbenstange an der Halterung und deren Zylinder an dem Bügel befestigt ist. In Bewegungsrichtung der Halterung hinter dem ersten Werkzeug ist ein zweites Werkzeug vorgesehen, das ebenfalls an der Halterung befestigt ist und im Fall des Kunststoffschweißens durch Ultraschall vorzugsweise eine Sonotrode ist. Dieses zweite Werkzeug ist zusätzlich quer zur Bewegungsbahn der Halterung verschiebbar gelagert. Zur Verschiebung des zweiten Werkzeugs dient eine weitere Zylinder/Kolben-Anordnung, deren Zylinder an der Halterung und deren Kolbenstange am zweiten Werkzeug befestigt ist.

Das bekannte Bearbeitungswerkzeug besitzt den Nachteil, dass es relativ aufwendig aufgebaut sein muss, um die beim Bearbeiten eines Werkstücks auftretenden Anforderungen an eine genaue Positionierung der beiden Werkzeuge des Unterwerkzeugs zu erfüllen.

Eine Vorrichtung der vorstehend angesprochenen Art ist aus der EP 1 586 427 bekannt. Das Stanzwerkzeug ist in einer Stanzstation angeordnet und das als Schweiß- oder Klebewerkzeug ausgebildete Verbindungswerkzeug ist in einer Schweiß- oder Klebestation vorgesehen. Die bekannte Vorrichtung weist einen Schiebetisch mit einer Aufnahme für das zu bearbeitende Werkstück auf, der zwischen der Stanzstation und der Schweiß- oder Klebestation hin und her fahrbar ist. Die Arbeitsweise der bekannten Vorrichtung ist nun wie folgt: Zunächst wird der Schiebetisch im Bereich der Schweiß- oder Klebestation angeordnet, um das Werkstück in dessen Aufnahme einzulegen. Nach der Befestigung des Werkstücks in der Aufnahme wird diese mittels einer Halterung soweit angehoben, bis die in der Aufnahme vorgesehenen Schweißwerkzeuge freistehen. Das Werkstück wird mittels des Schiebetisches zur Stanzstation gefahren. In dieser ist die Matrize in einer entsprechend niedrigen Position angeordnet, so dass sie bei angehobener Annahme von den Seitenwänden des Werkstücks kollisionsfrei überfahren werden kann, bis sie in der Mitte eines U-förmigen Raums des Werkstücks angeordnet ist. Anschließend wird dieses durch Absenken der Halterung so tief herabgesenkt, bis es mit seiner Unterseite auf der Matrize aufliegt. Im weiteren Verlauf wird mit einem oder mehreren Stanzstempeln durch Betätigung eines entsprechenden Stanzzylinders eine Stanzung durchgeführt, um das Werkstück mit wenigstens einem Loch zu versehen. Nach Beendigung des Stanzprozesses wird die Aufnahme angehoben, bis die Matrize freisteht. Dann wird der Schiebetisch samt dem Werkstück in die Schweißstation gefahren und schließlich die Aufnahme wieder abgesenkt, bis ihre Unterseite den Schweißwerkzeugen dicht gegenübersteht. Anschließend erfolgt ein Schweißvorgang, indem eine Sonotrode mit ihrem Arbeitshub von unten gegen das Werkstück gedrückt wird. Nach Beendigung des Schweißvorgangs wird das fertige Werkstück bei noch abgesenkter Aufnahme entnommen und ein neues Werkstück auf die Aufnahme aufgelegt und die beschriebenen Arbeitsschritte werden bei dem neuen Werkstück wiederholt.

Es ist Aufgabe der vorliegenden Erfindung, eine bekannte Bearbeitungsvorrichtung, insbesondere zum Stanzen und Verbinden von Kunststoffteilen für ein Kraftfahrzeug derart auszugestalten, dass das fertig bearbeitete Werkstück sofort nach der Bearbeitung automatisch und zeitsparend aus der Bearbeitungvorrichtung entnommen werden kann.

Für diese Aufgabe schlägt die Erfindung eine Lösung gemäß den kennzeichnenden Merkmalen des Anspruchs 1 vor.

Das erfindungsgemäße Bearbeitungswerkzeug zeichnet sich dadurch aus, dass unter dem Oberwerkzeug des Bearbeitungswerkzeugs in einfacher Art und Weise unterschiedliche Bearbeitungseinheiten positioniert werden können. Das erfindungsgemäße Bearbeitungswerkzeug bildet somit vorzugsweise ein kombiniertes Stanz- und Verbindungswerkzeug aus und erlaubt es, dass in der Arbeitsposition der Vorrichtung hintereinander ein Stanz- und ein Verbindungsvorgang durchgeführt werden kann, ohne dass das Werkstück in seiner Lage verändert werden muss. Zusätzlich weist die Vorrichtung eine Entnahmeeinrichtung auf, in der das Werkstück in der Arbeitsstellung entnommen werden kann. Dies hat den Vorteil, dass gleichzeitig zur Entnahme des Werkstücks ein leerer Schwenktisch in seine Ladestellung vorbewegt und das nächste Werkstück bereits in die Vorrichtung eingebracht werden kann.

Vorteilhafte Weiterbildungen der Erfindung sind Gegenstand der Unteransprüche.

Weitere Vorteile und Einzelheiten der Erfindung sind den Ausführungsbeispielen zu entnehmen, die im folgenden anhand der Figuren beschrieben werden. Es zeigen:
- Figur 1:: eine schematische Darstellung einer ersten illustrativen Ausführungsform einer Vorrichtung ohne die erfindungsgemäße Entnahmeeinrichtung in einer Beladestellung,
- Figur 2:: eine Vorderansicht der ersten Ausführungsform der Vorrichtung,
- Figur 3:: eine Seitenansicht der ersten Ausführungsform der Vorrichtung,
- Figur 4:: eine perspektivische Darstellung der ersten Ausführungsform der Vorrichtung in einer Arbeitsstellung,
- Figur 5:: eine Vorderansicht der ersten Ausführungsform der Vorrichtung in ihrer Arbeitsstellung,
- Figur 6:: eine Seitenansicht der ersten Ausführungsform der Vorrichtung in ihrer Arbeitsstellung,
- Figur 7:: eine Vorderansicht eines ersten Ausführungsbeispiels eines Bearbeitungswerkzeugs in einer ersten Bearbeitungsposition,
- Figur 8:: eine Vorderansicht des ersten Bearbeitungswerkzeugs der Figur 7 in einer zweiten Bearbeitungsposition,
- Figur 9:: eine perspektivische Darstellung der erfindungsgemäßen Ausführungsform der Vorrichtung in ihrer Arbeitsstellung,
- Figur 10:: eine Vorderansicht der erfindungsgemäßen Ausführungsform der Vorrichtung,
- Figur 11:: eine Seitenansicht der erfindungsgemäßen Ausführungsform der Vorrichtung,
- Figur 12:: eine perspektivische Darstellung der erfindungsgemäßen Ausführungsform der Vorrichtung in ihrer Beladestellung,
- Figur 13:: eine Vorderansicht der erfindungsgemäßen Ausführungsform der Vorrichtung,
- Figur 14:: eine Seitenansicht der erfindungsgemäßen Ausführungsform der Vorrichtung,
- Figur 15:: eine vergrößerte Darstellung des Untertisches,
- Figur 16:: eine perspektivische Darstellung eines zweiten Ausführungsbeispiels eines Bearbeitungswerkzeugs,
- Figuren 17 und 18:: eine Vorderansicht des zweiten Ausführungsbeispiels des Bearbeitungswerkzeugs in zwei unterschiedlichen Positionen,
- Figur 19:: eine Seitenansicht des zweiten Ausführungsbeispiels des Bearbeitungswerkzeugs, und
- Figur 20:: eine Draufsicht auf das zweite Ausführungsbeispiel des Bearbeitungswerkzeugs.

Bevor nun im Detail die beiden Ausführungsführungsbeispiele des Bearbeitungswerkzeugs beschrieben werden, soll der einfachen Erläuterung halber die Vorrichtung beschrieben werden, in welcher die beiden Bearbeitungswerkzeuge bevorzugt eingesetzt werden.

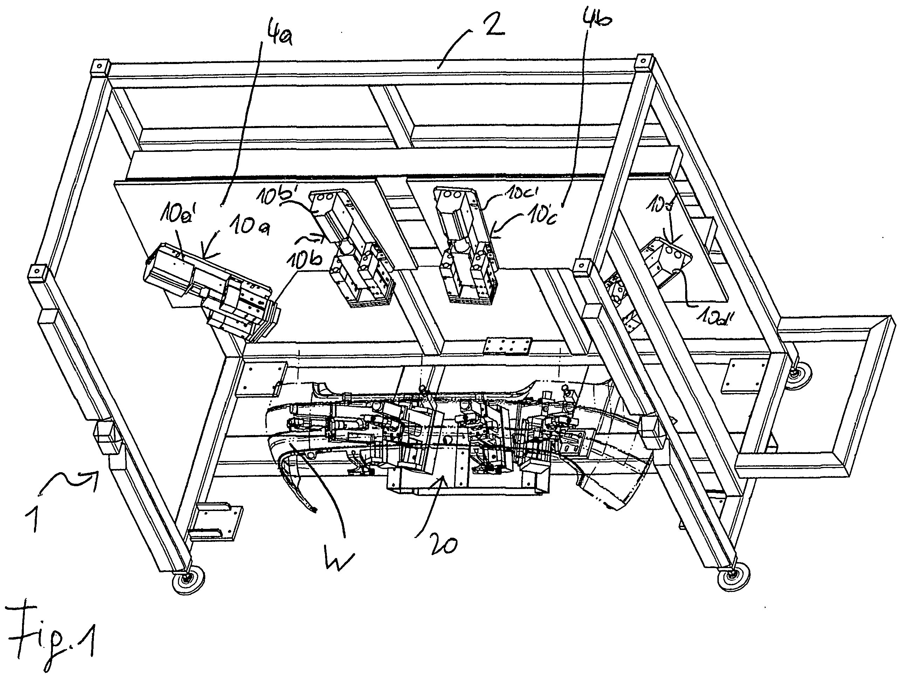

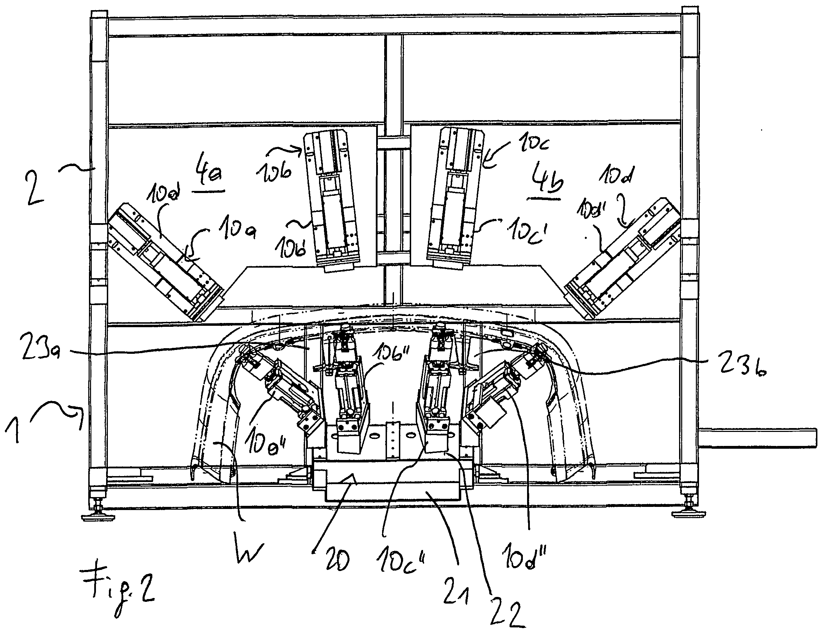

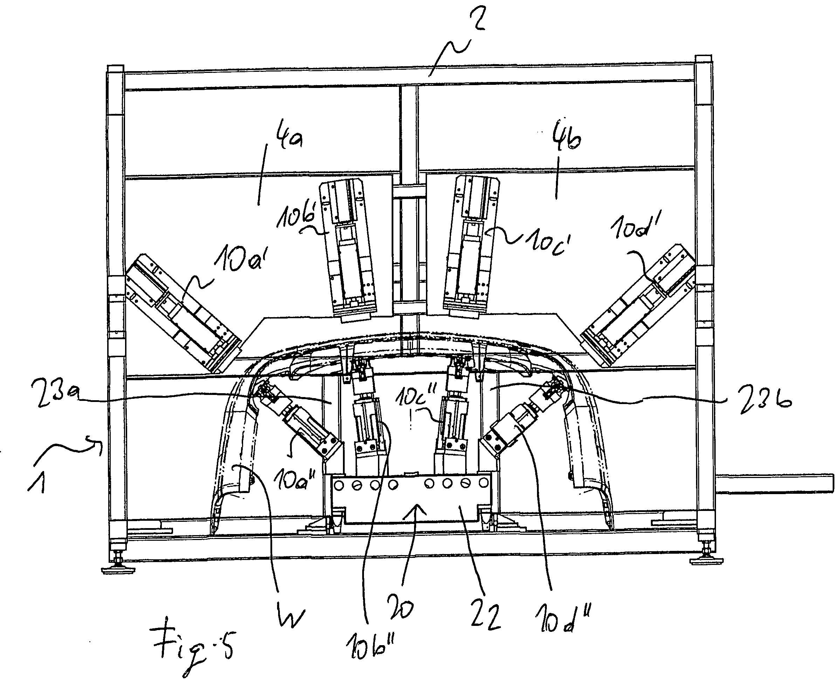

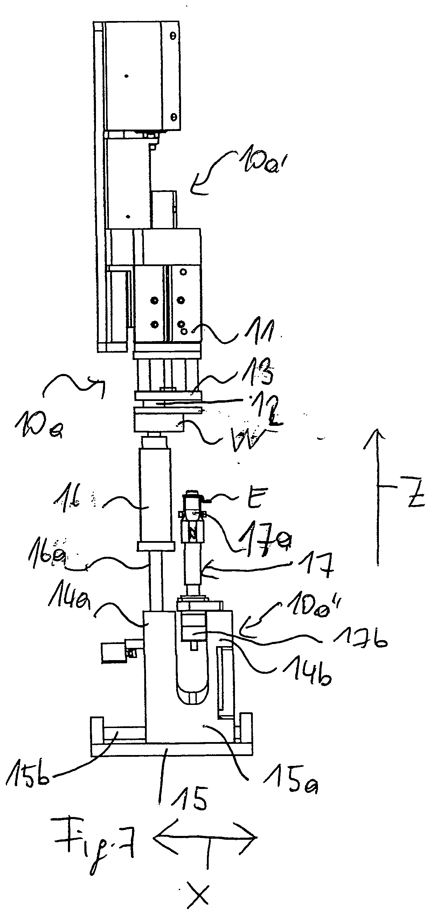

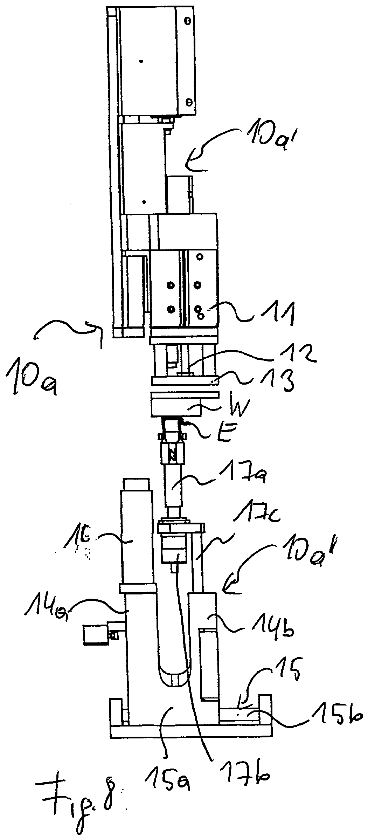

In den Figuren 1 bis 6 ist daher eine allgemein mit 1 bezeichnete erste Ausführungsform einer Vorrichtung zum Stanzen und Verbinden eines in den Figuren nur schematisch dargestellten Werkstücks W dargestellt, die einen Rahmen 2 aufweist, in dem - im hier gezeigten Ausführungsbeispiel - vier Bearbeitungswerkzeuge 10a-10d angeordnet sind. Jedes Bearbeitungswerkzeug 10a-10d ist zweiteilig ausgebildet und besitzt jeweils ein Oberwerkzeug 10a'-10d' und ein Unterwerkzeug 10a"-10d". Die Ausbildung der Bearbeitungswerkzeuge 10a-10d wird nachstehend anhand der Figuren 7 und 8 noch erläutert werden.

Die Vorrichtung 1 besitzt einen Schwenktisch 20, dessen Untertisch 21 stationär am Rahmen 2 der Vorrichtung 1 montiert ist. Ein Obertisch 22 des Schwenktisches 20 ist über eine nicht näher dargestellte Gelenkverbindung 23 am Untertisch 21 angelenkt, so dass der Obertisch 22 um eine Gelenkachse gegenüber dem Untertisch 21 schwenkbar ist. Am Obertisch 22 sind zwei Aufnahmen 23a, 23b angeordnet, welche das Werkstück W tragen. Im hier gezeigten Fall ist das Werkstück W ein Kotflügel eines Kraftfahrzeugs, in den wie nachstehend beschrieben vier Stanzlöcher eingebracht und eine Verbindung des Kotflügels mit einem Einlegeteil durchgeführt werden soll. Dem Fachmann ist aber klar ersichtlich, dass die Vorrichtung 1 nicht nur für einen Kotflügel eingesetzt werden kann. Insbesondere ist es möglich, Bauteile zur Karosserie-Außenverkleidung zu bearbeiten, insbesondere Stoßfänger, Front- und Heckblenden oder dergleichen. Auch ist die Vorrichtung 1 nicht für eine Verwendung im automotiven Bereich beschränkt, sondern in einer Vielzahl von anderen Bereichen einsetzbar.

Auf dem Obertisch 22 des Schwenktisches 20 sind die Unterwerkzeuge 10a"-10d" der Bearbeitungswerkzeuge 10a-10d angeordnet, so dass bei einer Schwenkbewegung des Obertisches 22 auch die auf ihm befestigten Unterwerkzeuge 10a"-10d" der Bearbeitungswerkzeuge 10a-10d mitgeschwenkt werden.

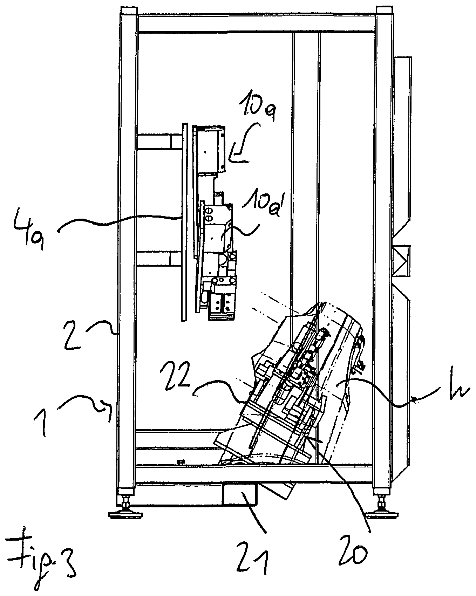

Am Rahmen 2 der Vorrichtung 1 sind - wie am besten aus den Figuren 1 und 3 ersichtlich ist - zwei Trägerplatten 4a, 4b befestigt, auf der die Oberwerkzeuge 10a'-10d' der Bearbeitungswerkzeuge 10a-10d angebracht sind. Es ist selbstverständlich, dass hier das Oberwerkzeug 10a'-10d' eines jeden Bearbeitungswerkzeugs 10a-10d derart auf das zugehörige Unterwerkzeug 10a"-10d" ausgerichtet ist, dass bei einem Bearbeitungsvorgang die Oberwerkzeuge 10a'-10d' mit den Unterwerkzeugen 10a"-10d" zusammenwirken.

Die Figuren 7 und 8 zeigen nun ein erstes Ausführungsbeispiel des Bearbeitungswerkzeugs 10a, die weiteren Bearbeitungswerkzeuge 10b-10d der Vorrichtung sind vorzugsweise gleich ausgebildet. Man erkennt wiederum in den Figuren 7 und 8 das Oberwerkzeug 10a' und das Unterwerkzeug 10a". Das Oberwerkzeug 10a' ist als Stanzwerkzeug ausgebildet und weist einen Stanzkopf 11 auf, der einen Stanzstempel 12 beaufschlagt, so dass dieser zum Unterwerkzeug 10a" relativ bewegbar ist. Der Stanzstempel 12 ist von einem Abstreifer oder Niederhalter 13 umgeben, so dass das Werkstück W beim Stanzvorgang hinreichend lagefixiert ist. Ein derartiger Stanzkopf 11 ist an und für sich bekannt und muss daher nicht mehr näher beschrieben werden.

Wesentlich ist nun die Ausbildung des Unterwerkzeugs 10a". Dieses weist zwei Bearbeitungseinheiten 14a und 14b auf, die relativ zum Oberwerkzeug 10a' verschiebbar sind, so dass wahlweise die erste Bearbeitungseinheit 14a oder die zweite Bearbeitungseinheit 14b unter dem Oberwerkzeug 10a' positionierbar ist, um mit diesem Oberwerkzeug 10a' zusammenzuwirken. Im hier gezeigten Ausführungsbeispiel wird dies dadurch erreicht, dass die beiden Bearbeitungseinheiten 14a, 14b mittels einer Bewegungseinrichtung 15', hier eines Schlittens 15, in einer im wesentlichen orthogonal zur Richtung Z, also der Richtung der Zustellbewegung des Unterwerkzeugs 10a" zu dem ihr zugeordneten Oberwerkzeug 10a' verlaufenden Verschiebebewegung, also in Richtung X der Figur 7, bewegbar sind: Die Bearbeitungseinheiten 14a, 14b sind auf einem Schlittentisch 15a des Schlittens 15 angeordnet, der auf einer Schlittenführung 15b verschiebbar gelagert ist. Durch eine Verschiebung des Schlittentisches 15a entlang der Schlittenführung 15b kann somit - wie in Figur 7 gezeigt - die erste Bearbeitungseinheit 14a unter dem Oberwerkzeug 10a' positioniert werden. Durch eine entsprechende Verschiebebewegung des Schlittentisches 15a in der Figur 7 nach links wird dann die zweite Bearbeitungseinheit 14b unter dem Oberwerkzeug 10a' des Bearbeitungswerkzeugs 10a positioniert. Es ist dem Fachmann aber klar ersichtlich, dass die vorstehend beschriebene Konstruktion - beide Bearbeitungseinheiten 14a und 14b sind auf einem gemeinsamen Schlitten 15 positioniert - zwar bevorzugt aber nicht zwingend ist. Es ist auch möglich, dass die beiden Bearbeitungseinheiten 14a, 14b - etwa durch jeweils einen Schlitten - separat voneinander bewegbar sind. Auch ist es nicht zwingend, dass - wie im beschriebenen Ausführungsbeispiel - nur zwei Bearbeitungseinheiten 14a, 14b vorgesehen sind. Es ist genauso möglich, dass das Unterwerkzeug 10a" drei oder mehr zum Oberwerkzeug 10a' relativbewegliche Bearbeitungseinheiten 14a, 14b aufweist.

Im hier beschriebenen Fall dient die erste Bearbeitungseinheit 14a des Unterwerkzeugs 10a" zum Ausstanzen einer Öffnung im Werkstück W. Demzufolge weist die erste Bearbeitungseinheit 14a eine Matrize 16 auf, welche mit dem Stanzstempel 12 des Oberwerkzeugs 10a' zusammenwirkt. Die Matrize 16 ist von einer Hubeinheit 16a in Richtung des Oberwerkzeugs 10a' und somit zum Stanzstempel 12 hin- und von diesem wegbewegbar.

Die zweite Bearbeitungseinheit 14b dient zum Verbinden eines Einlegteils E (siehe dazu Figur 7) mit dem Werkstück W. Dies geschieht im hier beschriebenen Fall durch eine Ultraschallverschweißung. Demzufolge weist die zweite Bearbeitungseinheit 14b eine Ultraschalleinheit 17 mit einer Sonotrode 17a und einem Schwingungsgenerator 17b auf. Eine Hubvorrichtung 17c (siehe Figur 8) dient zum Verfahren der Sonotrode 17a zum Oberwerkzeug 10a' hin, wie dies in Figur 8 dargestellt ist. Natürlich ist es auch möglich, anstelle des Ultraschall-Schweißens zum Verbinden des Einlegeteils E dies zu kleben, zu fügen oder in einer anderen Art und Weise zu verbinden. Dem Fachmann sind die Modifikationen, die er dann vornehmen muss, ersichtlich, so dass sie hier nicht weiter beschrieben werden.

Die Funktionsweise der Vorrichtung 1 gemäß der ersten Ausführungsform ist wie folgt: Wie am besten aus der Figur 3 ersichtlich, wird zum Einlegen des Werkstücks W in die Vorrichtung 1 der Obertisch 22 des Schwenktisches 20 nach vorne geklappt. Vor dem Auflegen des Werkstücks W auf die Aufnahmen 23a, 23b des Schwenktisches 20 werden jedoch - wie in Figur 8 dargestellt - die mit dem Werkstück W zu verbindenden, hier zu verschweißenden Einlegteile E auf die zweiten Bearbeitungseinheiten 14b der Unterwerkzeuge 10a"-10d" gelegt. Im hier beschriebenen Fall werden also die Einlegteile E auf die Sonotroden 17 aufgelegt, die also als Fügekopf fungieren.

Danach wird das Werkstück W durch eine einfach durchzuführende Schwenkbewegung des Schwenktisches 20 unter die Oberwerkzeuge 10a'-10d' der Bearbeitungswerkzeuge 10a-10d geschwenkt. In der Regel erfolgt die Positionierung des Werkstücks W unter den Oberwerkzeugen 10a'-10d' durch diese Schwenkbewegung. Es ist aber nicht ausgeschlossen, dass der Schwenktisch hierzu eine kurze Strecke in Richtung der Oberwerkzeuge 10a'-10d' verfahren wird.

Die vorstehend erläuterte Konstruktion besitzt den Vorteil, dass durch die Verwendung des Schwenktisches 20 zum Positionieren des Werkstücks W unter den Oberwerkzeugen 10a'-10d' und die Anordnung der Unterwerkzeuge 10a"-10d" auf dem Schwenktisch 20 die beschriebene Vorrichtung 1 weniger tief und somit kompakter baut und damit einen geringeren Platz in der Fertigungshalle einnimmt. Außerdem ist eine kurze Schwenkbewegung deutlich einfacher zu realisieren als eine lange Verfahrbewegung, wie dies bei den bekannten, einen zwischen der Schweißstation und der Verbindungsstation pendelnden Schiebetisch verwendenden Vorrichtungen der Fall ist.

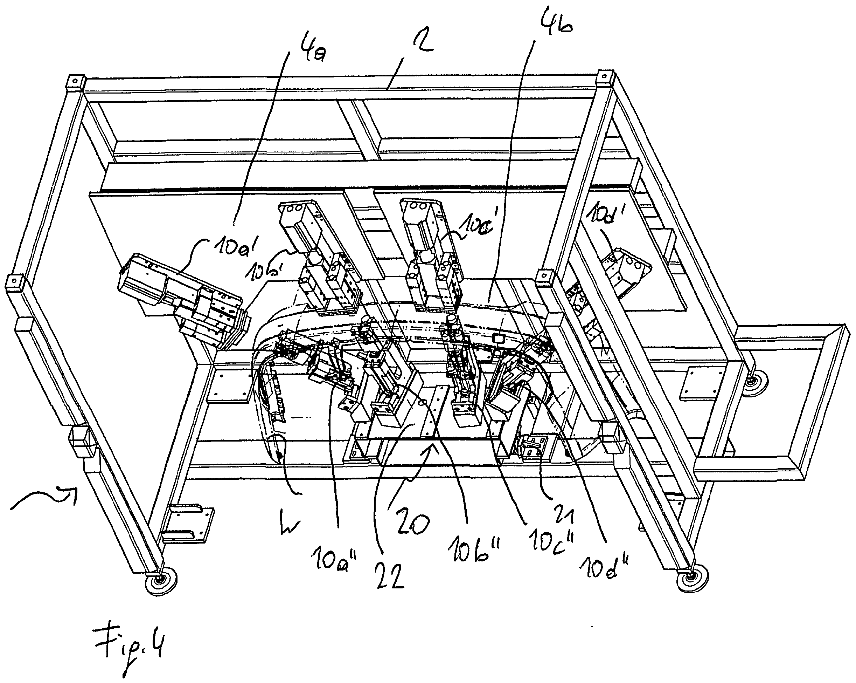

Nach der Durchführung dieser Positionierbewegung des Werkstücks W durch den Schwenktisch 20 befindet sich dieser und somit das Werkstück W in der in den Figuren 4 bis 6 dargestellten Position unterhalb der Oberwerkzeuge 10a'-10d'. Zum Ausstanzen der in das Werkstück W einzubringenden Öffnungen werden dann - wie in Figur 7 dargestellt - die ersten Bearbeitungseinheiten 14a der Unterwerkzeuge 10a"-10d" der hier als kombinierte Stanz- und Verbindungswerkzeuge ausgebildeten Bearbeitungswerkzeuge 10a-10d positioniert, so dass die Matrizen 16 der ersten Bearbeitungseinheiten 14a unter den Stanzstempeln 12 der Oberwerkzeuge 10a'-10d' angeordnet sind. Durch eine Hubbewegung der Hubeinheiten 16a werden dann die Matrizen 16 in Anlage mit der Innenseite des Werkstücks W gebracht und fungieren derart als Gegenhalter für die Stanzstempel 12. Durch an und für sich bekannte und daher nicht mehr im Detail beschriebene Stanzbewegungen der Stanzstempel 12 werden dann die Stanzöffnungen im Werkstück W ausgebildet.

Nach dem Herstellen dieser Öffnungen werden die Stanzstempel 12 vom Werkstück W leicht wegbewegt. Genauso werden die in Anlage mit dem Werkstück W befindlichen Matrizen 16 durch eine Rückwärtsbewegung der Hubeinheiten 16a vom Werkstück W wegbewegt.

Durch eine Bewegung des Schlittens 15 werden dann die zweiten Bearbeitungseinheiten 14b unter den Oberwerkzeugen 10a'-10d' positioniert, wie dies in Figur 8 dargestellt ist. Durch eine Zustellbewegung der Hubvorrichtungen 17c werden die Sonotroden 17a samt den auf ihnen gelagerten Einlegeteile E zum Werkstück W hinbewegt, gegen dieses gepresst und die Einlegeteile E werden mit dem Werkstück W durch eine Ultraschallbeaufschlagung derselben mit diesem verbunden. Der Bearbeitungsvorgang ist somit abgeschlossen.

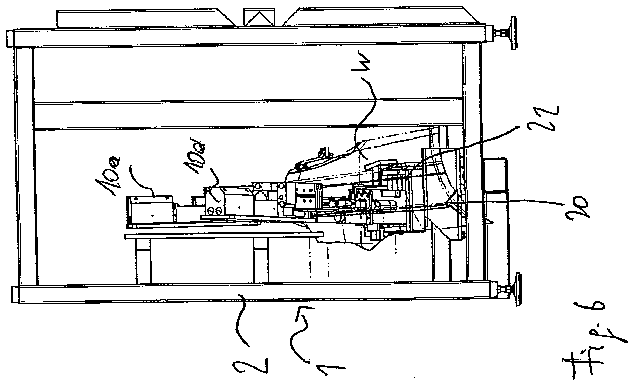

Zur Entnahme des Werkstücks W wird dann wiederum der Schwenktisch 20 zusammen mit dem Werkstück W von seiner in Figur 6 gezeigten Arbeitsstellung in seine in Figur 3 gezeigte Beladestellung zurückgeschwenkt und das Werkstück W kann leicht aus der Vorrichtung 1 entnommen werden.

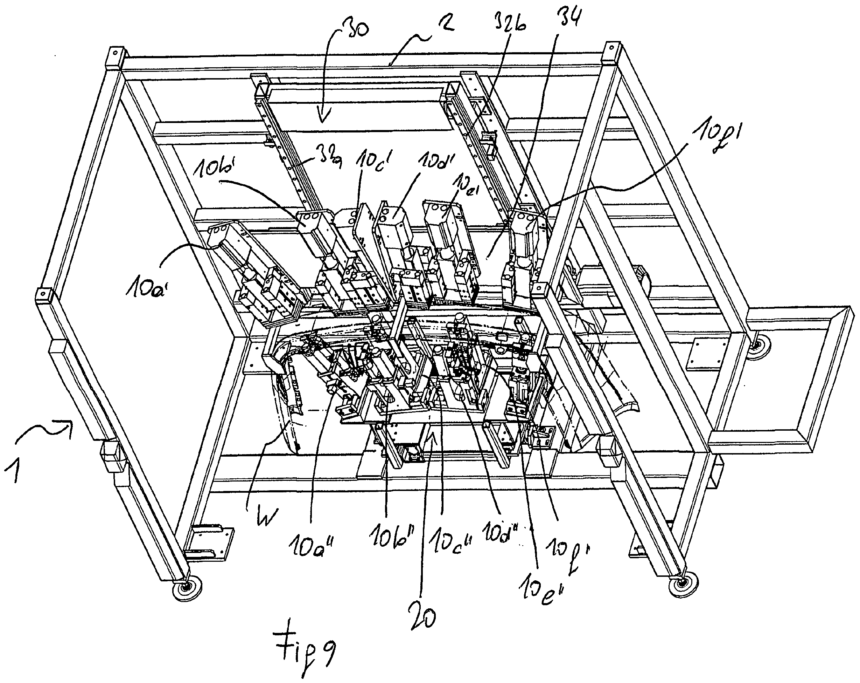

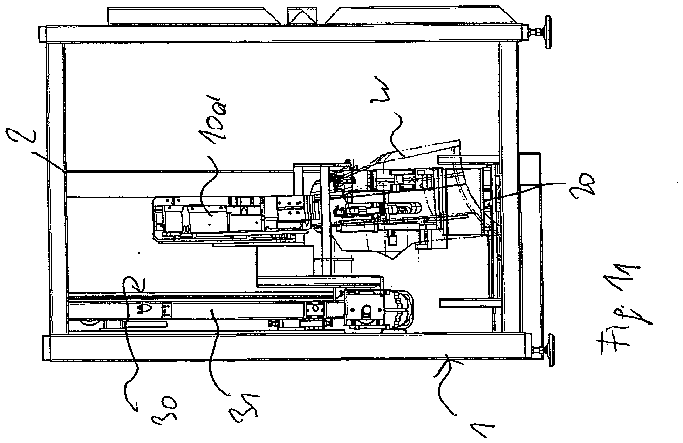

In den Figuren 9 bis 14 ist die erfindungsgemäße Ausführungsform der Vorrichtung 1 dargestellt, wobei einander entsprechende Bauteile mit den gleichen Bezugszeichen versehen und nicht mehr beschrieben werden. Der wesentliche Unterschied zwischen der ersten illustrativen und der erfindungsgemäßen Ausführungsform besteht nun weniger darin, dass die Vorrichtung 1 der zweiten Ausführungsform sechs Bearbeitungswerkzeuge 10a-10f mit Oberwerkzeugen 10a'-10f' und Unterwerkzeugen 10a'-10f' besitzt, sondern dass sie eine Entnahmeeinrichtung 30 aufweist, durch welche das auf dem Schwenktisch 20 gelagerte Werkstück W in der Arbeitsstellung der Vorrichtung 1 aus dieser entnommen werden kann.

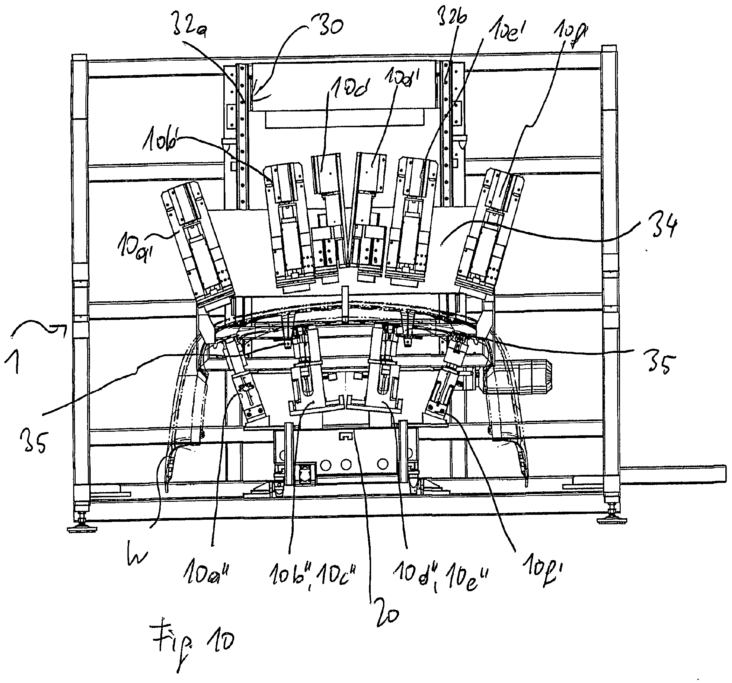

Die Verwendung der Entnahmeeinrichtung 30 für das Werkstück W bringt nun mit sich, dass die Oberwerkzeuge 10a'-10f' der Bearbeitungswerkzeuge 10a-10f nun nicht mehr - bei der ersten Ausführungsform der Vorrichtung 1 - im wesentlichen stationär in der Vorrichtung 1 angeordneten Trägerplatten 4a, 4b angebracht sind, sondern dass vorgesehen ist, dass - wie am besten aus den Figuren 9 und 10 ersichtlich - eine Trägerplatte 34 von einer Hubeinheit 31 der Entnahmeeinrichtung 30 verfahrbar ist. Diese weist Führungsschienen 32a, 32b auf, auf denen die Trägerplatte 34 schlittenartig verfahrbar ist.

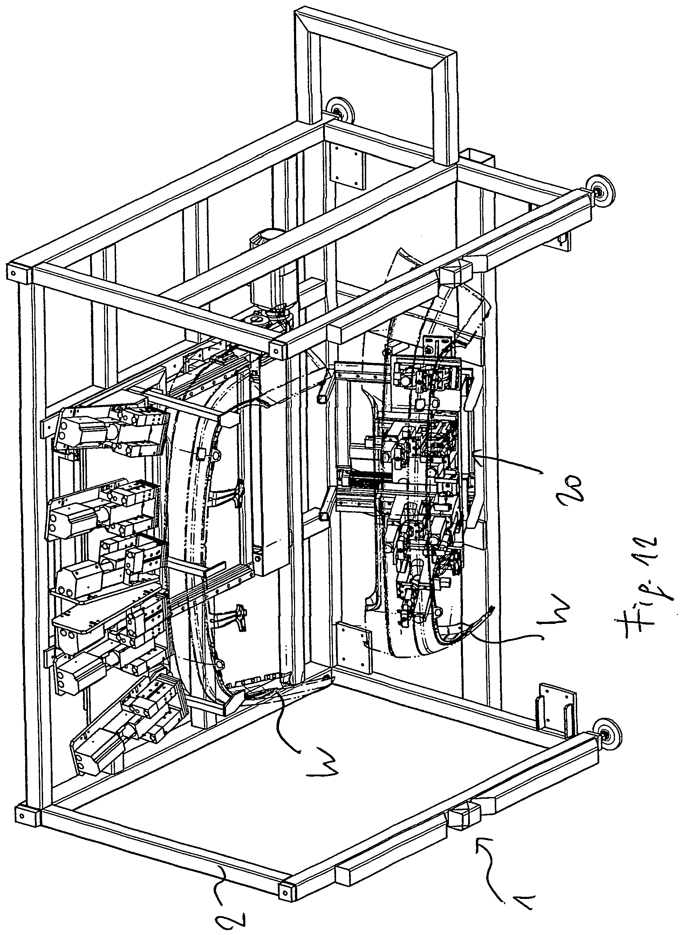

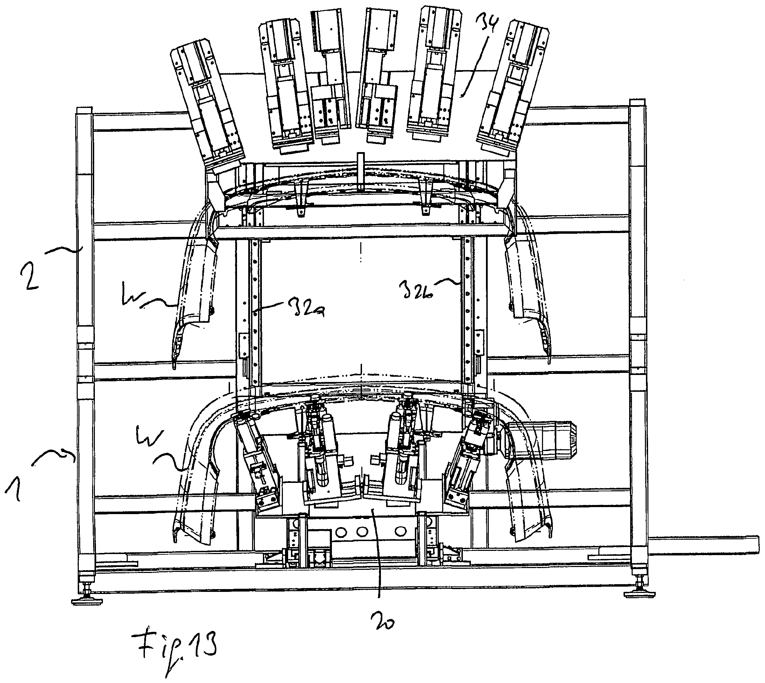

Die Figur 9 zeigt nun die Vorrichtung 1 samt dem Werkstück W nach der Beendigung des Bearbeitungsvorgangs, also nach dem durch einen Stanzprozess die Öffnungen in das Werkstück W eingebracht und die Einlegeteile E mit dem Werkstück W verschweißt wurden. Um nun das Werkstück W einfach aus der Vorrichtung 1 entnehmen zu können, werden Greifer 35 (siehe Figur 10) der Entnahmevorrichtung 30 ausgefahren und umfassen das Werkstück W. Dann wird mittels der Hubeinheit 31 der Entnahmeeinrichtung 30 - wie in den Figuren 12 und 13 dargestellt - die Trägerplatte 34 samt den auf ihr angeordneten Oberwerkzeugen 10a'-10f und das Werkstück W nach oben, also von den Unterwerkzeugen 10a"-10f" wegbewegt. Das Werkstück W kann dann von einer nicht gezeigten Handhabungseinrichtung aus der Entnahmeeinrichtung 30 entnommen werden.

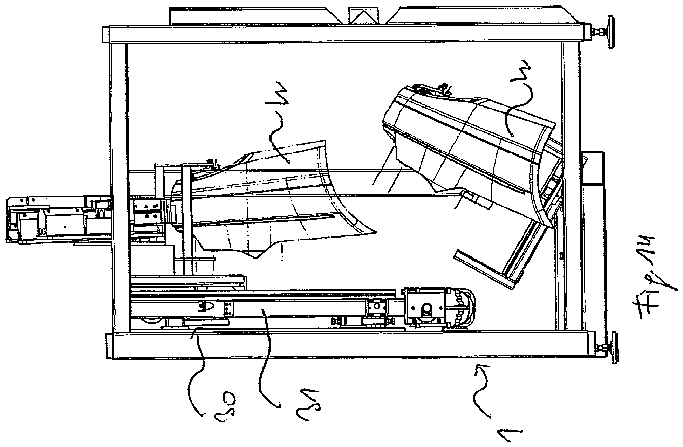

Gleichzeitig oder danach wird dann - wie in Figur 14 gezeigt - der Schwenktisch 20 in seine Ladestellung vorbewegt und das nächste Werkstück W kann in die Vorrichtung 1 eingebracht werden.

Bei der vorstehenden Beschreibung wird davon ausgegangen, dass die Oberwerkzeuge 10a'-10d' bzw. 10a'-10f zum Stanzen und die Unterwerkzeuge 10a"-10d" bzw. 10a"-10f" zum Verbinden dienen. Natürlich kann dies auch umgekehrt sein, d. h., dass die Unterwerkzeuge 10a"-10d" bzw. 10a"-10f" zum Stanzen und die Oberwerkzeuge 10a'-10d' bzw. 10a'-10f zum Verbinden dienen.

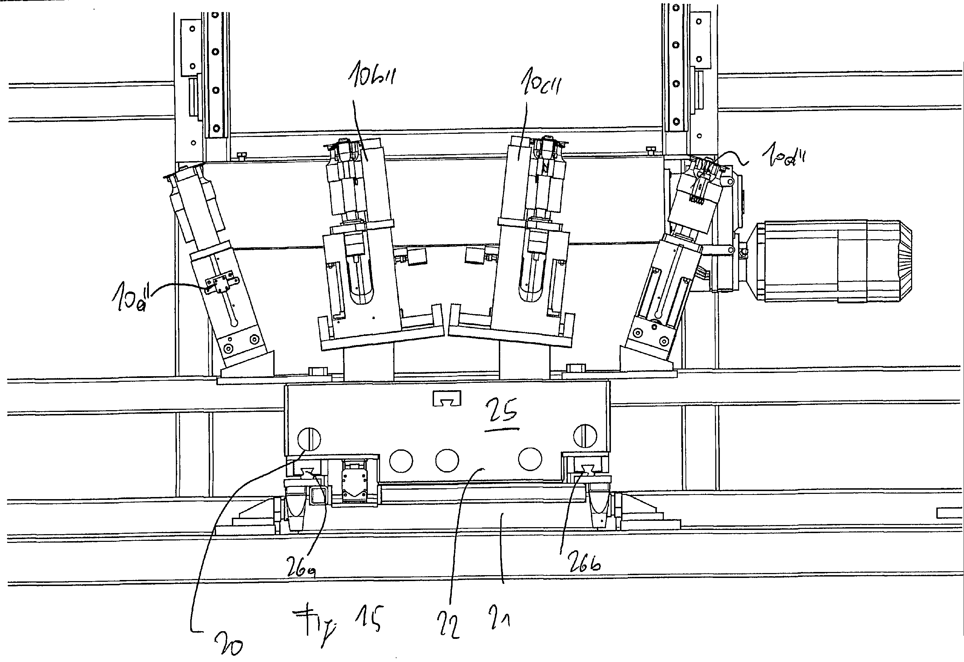

In der Figur 15 ist nun eine vergrößerte Darstellung des Schwenktisches 20 der ersten Ausführungsform dargestellt. Man erkennt wiederum die vier Unterwerkzeuge 10a"-10d". Um nun leichter eng benachbart liegende Teile des Werkstücks W zu bearbeiten können, ist vorgesehen, dass die Unterwerkzeuge 10a"-10f" auf einer Trägerplatte 25 angeordnet sind, welche in Schienen 26a, 26b geführt und daher verschiebbar im Schwenktisch 20 angeordnet ist, so dass die Unterwerkzeuge 10a"-10f" relativ zu den zugehörigen Oberwerkzeugen 10a'-10f' mittels der beweglichen Trägerplatte 25 verschiebbar sind.

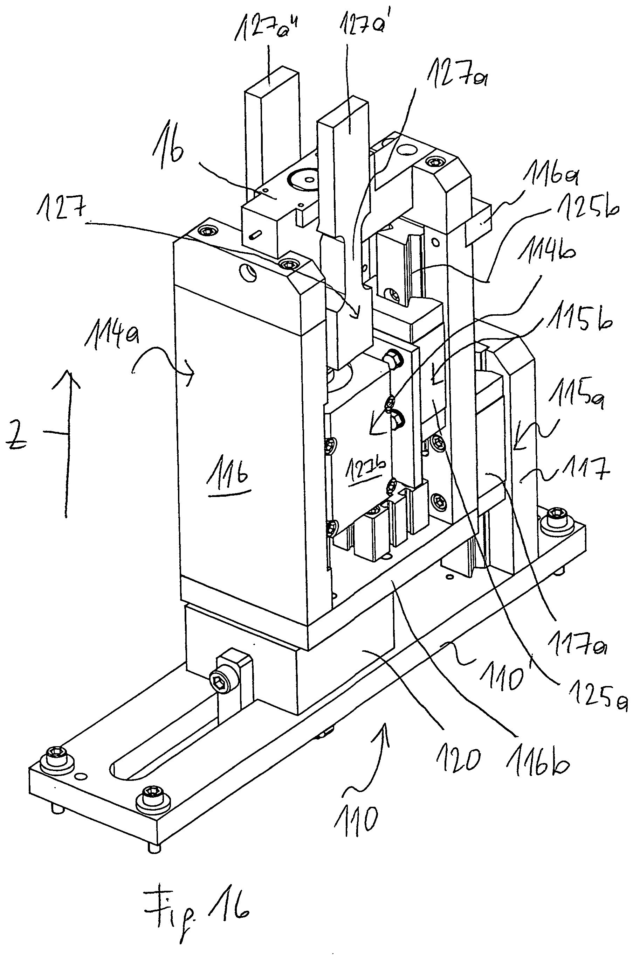

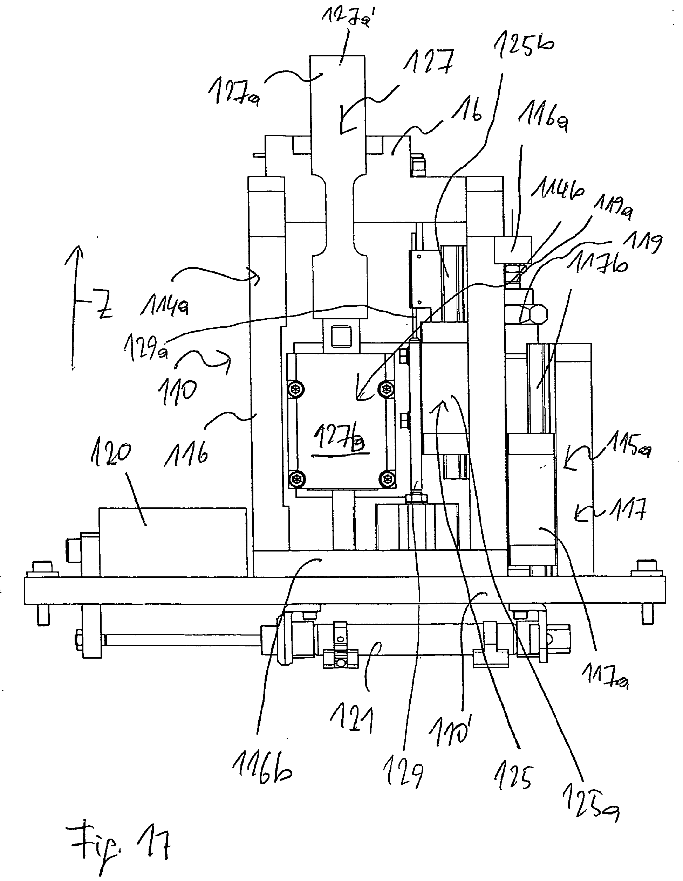

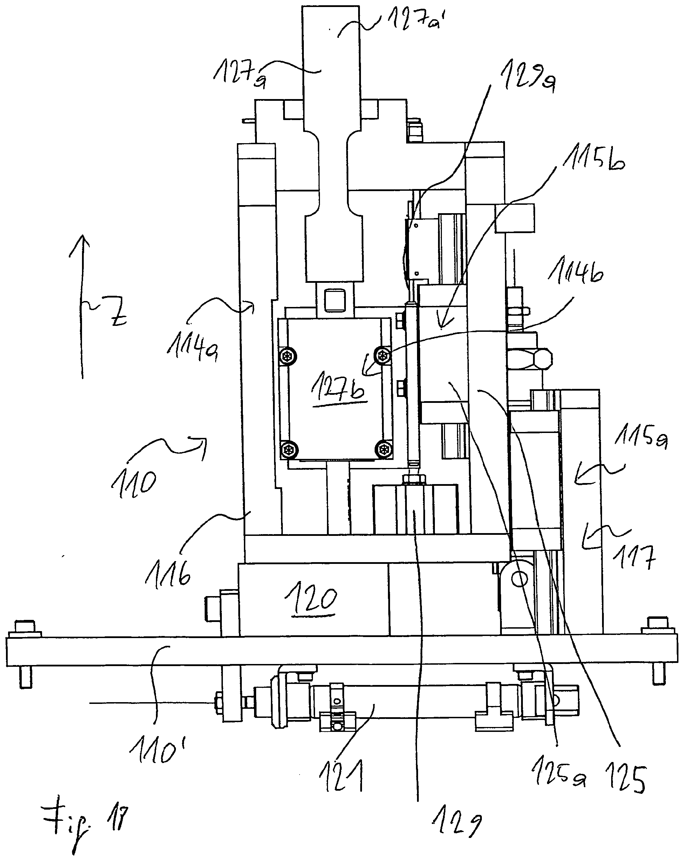

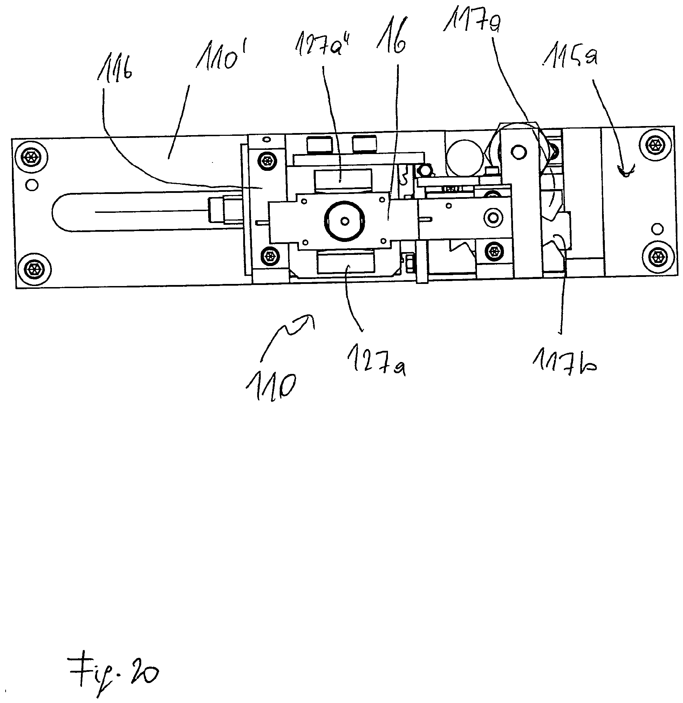

In den Figuren 16 bis 20 ist ein zweites Ausführungsbeispiel eines Unterwerkzeugs 110 der Vorrichtung 1 dargestellt, welches seiner Funktion nach dem in den Figuren 7 und 8 dargestellten Unterwerkzeug 10a entspricht. Demzufolge können eine oder mehrere der Unterwerkzeug 10a-10d bzw. 10a-10f der Vorrichtung 1 durch das Unterwerkzeug 110 gemäß dem zweiten Ausführungsbeispiel ersetzt werden. Der wesentliche Unterschied zwischen den beiden Ausführungsbeispielen der Unterwerkzeuge besteht nun darin, dass den Bearbeitungseinheiten 14a und 14b entsprechende Bearbeitungseinheiten 114a, 114b des Unterwerkzeugs 110 nun nicht mehr - wie beim Unterwerkzeug 10a - durch eine Zustellbewegung entlang einer im wesentlichen orthogonal zur Richtung Z der zum zugeordneten Oberwerkzeugs verlaufenden Verschiebebewegung wahlweise positioniert werden, sondern dass die beiden Bearbeitungseinheiten 114a und 114b in der Zustellrichtung Z des Unterwerkzeugs 110 relativ zum Oberwerkzeug 10a' bewegt werden, ohne dass grundsätzlich hierbei eine Verschiebung der Bearbeitungselemente 114a, 114b in der hierzu orthogonalen Bewegungsrichtung X stattfindet: Es ist vorgesehen, dass die erste Bearbeitungseinheit 114a mittels einer ersten Bewegungseinrichtung 115a und die zweite Bearbeitungseinheit 114b mittels einer zweiten Bewegungseinrichtung 115b jeweils zum Oberwerkzeug 10a' hin und von diesem weg bewegbar sind. In dem hier gezeigten zweiten Ausführungsbeispiel des Bearbeitungswerkzeugs 110 wird dies in vorteilhafter Art und Weise wie nachstehend beschrieben, bewerkstelligt:
Entsprechend der Bearbeitungseinheit 14a des ersten Ausführungsbeispiels dient die erste Bearbeitungseinheit 114a des zweiten Ausführungsbeispiels wiederum zum Ausstanzen einer Öffnung im Werkstück W und weist demzufolge eine Matrize 16 auf, welche mit dem Stanzstempel 12 des Oberwerkzeugs 10a' zusammenwirkt. Die Matrize 16 wird von einem U-förmigen Rahmen 116 getragen, welcher von der ersten Bewegungseinrichtung 115a in Richtung des Pfeils Z verschiebbar ist. Hierzu ist - wie am besten aus den Figuren 16 bis 18 ersichtlich ist - vorgesehen, dass die Bearbeitungseinheit 114a auf einem Schlittentisch 117a eines Schlittens 117 der Bewegungseinrichtung 115a angeordnet ist. Der Schlitten 117 ist im wesentlichen orthogonal zu einem Grundelement 110' angeordnet, so dass durch eine Verschiebebewegung des Schlittentisches 117a entlang einer Schlittenführung 117b eine Bewegung der ersten Bearbeitungseinheit 114a in Z-Richtung durchführbar ist. Es ist vorgesehen, dass die Bewegungseinrichtung 115a einen hydraulischen oder pneumatischen Kolben 119 besitzt, dessen Kolbenstange 119a an einem Ausleger 116a des U-förmigen Rahmens 116 der ersten Bearbeitungseinheit 114a angreift. Durch ein Ausfahren der Kolbenstange 119a des Kolbens 119 erfolgt dann die Zustellbewegung der Bearbeitungseinheit 114a und somit der Matrize 16 in Richtung des Stanzkopfes 12 des Oberwerkzeugs 10a (siehe Figuren 17 und 18).

Um nun die beim Stanzvorgang auftretende Belastung der ersten Bearbeitungseinheit 114a nicht oder nicht ausschließlich von der Bewegungseinrichtung 115a kompensieren zu müssen, ist beim beschriebenen Ausführungsbeispiel ein Unterstützungselement 120 vorgesehen, dass von einer Antriebseinrichtung 121 - wie aus den Figuren 17 und 18 ersichtlich - unter die erste Bearbeitungseinheit 114a verschiebbar ist. In der in Figur 17 dargestellten Stellung der ersten Bearbeitungseinheit 114a liegt ein unterer Balken 116b des Rahmens 116 auf der Grundplatte 110' auf und das Unterstützungselement 120 befindet sich in einer Ausgangsposition, in der es sich außerhalb des Rahmens 116 der ersten Bearbeitungseinheit 114a befindet. Wird nun die erste Bearbeitungseinheit 114a - wie vorstehend beschrieben - durch die erste Bewegungseinheit 115a angehoben, kann dann das Unterstützungselement 120 - wie in Figur 18 gezeigt - unter die erste Bearbeitungseinheit 114a bewegt werden. Der untere Balken 116b des U-förmigen Rahmens 116 setzt dann auf der Oberseite des Unterstützungselements 120 auf und der Kolben 119a kann zurückgezogen werden.

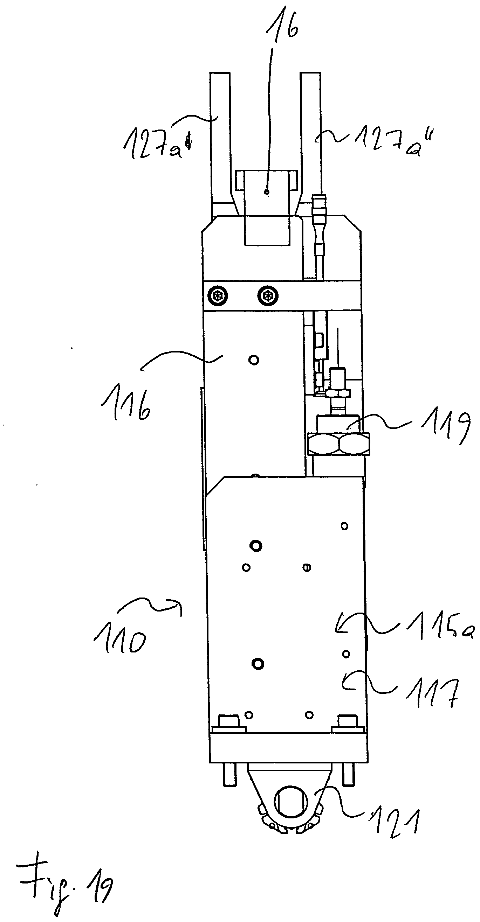

Die zweite Bearbeitungseinheit 114b ist im U-förmigen Rahmen 116 der ersten Bearbeitungseinheit 114a angeordnet, so dass sie von einer Bewegung derselben mitgenommen wird. Sie weist wiederum eine Ultraschalleinheit 127 mit einer Sonotrode 127a und einem Ultraschall-Generator 127b auf, wobei im hier gezeigten Fall (siehe Figuren 16 und 19) die Sonotrode 127a gabelartig ausgebildet ist und zwei Sonotrodenelemente 127a' und 127a" besitzt. Wie am besten aus diesen zu entnehmen ist, sind die beiden Sonotrodenelemente 127a' und 127a" an beiden Seiten der Matrize 16 angeordnet und ragen über diese hinaus.

Das hier beschriebene Bearbeitungswerkzeug 114b dient insbesondere zum Verschweißen von rohrförmigen Werkstücken wie z.B. einem Sensorhalter eines Kraftfahrzeugs, der an einem Kotflügel angeschweißt werden soll.

Es ist aber auch möglich, dass anstelle von rohrförmigen Werkstücken auch stabförmige Werkstücke verschweißt werden. Bei der hier beschriebenen Ausgestaltung der zweiten Bearbeitungseinheit 114b mit über die Matrize 16 hinausragenden Sonotrodenelementen 127a' und 127a" ist es erforderlich, dass das obere Ende des Einlegeteils E über den oberen Enden der Sonotrodenelemente 127a' und 127a" liegt, damit das zwischen den beiden Sonotrodenelementen 127a' und 127a" aufgenommene Einlegeteil E über diese hinausragt und durch die Matrize 16 gegen das Werkstück W, mit dem das vorgenannte rohr- oder stabförmige Einlegeteil E verschweißt werden soll, gepresst werden kann. Dem Fachmann sind die Modifikationen, die er dann vorzunehmen hat, leicht ersichtlich, so dass sie nicht mehr im Detail beschrieben werden müssen.

Die zweite Bearbeitungseinheit 114b wird von der zweiten Bewegungseinheit 115b bewegt. Diese weist einen Schlitten 125 auf, dessen auf einer Schlittenführung 125b angeordneter Schlittentisch 125a die Ultraschalleinheit 127 trägt, so dass durch eine Bewegung des Schlittens 125 diese in Richtung des Oberwerkzeugs 10a verfahrbar ist. Zur Betätigung des Schlittens 125 der zweiten Bewegungseinrichtung 115b dient wiederum ein hydraulischer oder pneumatischer Kolben 129, dessen Kolbenstange 129' den Schlitten 125 beaufschlagt. Anstelle des pneumatischen Kolbens 129 kann hier-wie auch bei allen anderen beschriebenen Kolben - ein elektrischer Antrieb vorgesehen sein.

Die Funktionsweise der eines oder mehrerer der Unterwerkzeuge 110 gemäß im zweiten Ausführungsbeispiel aufweisenden Vorrichtung 1 ist nun wie folgt: Zuerst wird wieder - wie aus der Figur 3 ersichtlich - zum Einlegen des Werkstücks W in die Vorrichtung 1 der Obertisch 22 Schwenktisches 20 nach vorne geklappt. Vor dem Auflegen des Werkstücks W auf die Aufnahme 23a, 23b des Schwenktisches 23 wird das mit dem Werkstück W zu verbindende, hier zu verschweißende Einlegeteil E auf die Matrize 16 der ersten Bearbeitungseinheit 114 gelegt. Wie vorstehend erläutert, ragt deren oberes Ende über die oberen Enden der Sonotrodenelemente 127a' und 127a" hinaus. Dann wird das Werkstück W auf die Aufnahme 23a, 23b des Schwenktisches 20 gelegt und dieser wird durch eine einfach durchzuführende Schwenkbewegung unter die Oberwerkzeuge 10a'-10d' bzw. 10a'-10f' der Bearbeitungswerkzeuge 10a-10d bzw. 10a-10f geschwenkt. Auch hier ist nun der Vorteil gegeben, dass durch die Verwendung des Schwenktisches 20 zum Positionieren des Werkstücks W unter den Oberwerkzeugen 10a'-10d' bzw. 10a'-10f' durch den Schwenktisch die beschriebene Vorrichtung 1 weniger tief und somit kompakter baut und damit einen geringeren Platz in der Fertigungshalle einnimmt.

Nach der Durchführung dieser Positionierbewegung des Werkstücks W durch den Schwenktisch 20 befindet sich dieser und somit das Werkstück W wiederum in den in der Figur 4 bis 6 dargestellten Position unterhalb der Oberwerkzeuge 10a'-10d'. Um nun im Werkstück W die Stanzöffnungen einzubringen, wird dann die erste Bearbeitungseinheit 114a samt der auf ihren Matrizen 16 aufgesetzten Einlegeteile E durch die ersten Bewegungseinheiten 115a angehoben und die Einlegeteile E werden gegen das Werkstück W gepresst und bilden somit - genauso wie vorstehend beschrieben - Gegenhalter für die Stanzstempel 12 der Oberwerkzeuge 10a'-10d' aus. Durch die an und für sich bekannte und daher nicht mehr im Detail beschriebene Stanzbewegung des Stanzstempels 12 werden dann die Stanzöffnungen im Werkstück W ausgebildet. Um nun die Einlegeteile E in dem Werkstück W zu verschweißen, werden dann die zweiten Bearbeitungseinheiten 114b von den ihnen zugeordneten zweiten Bewegungseinrichtungen 115b in Richtung des Werkstücks W und somit des zugeordneten Oberwerkzeugs 10a'-10d' vorgeschoben. Die Sonotrodenelemente 127a' und 127a" werden gegen das Werkstück W gepresst und die Einlegeteile E werden mit diesen durch eine Ultraschall-Beaufschlagung verbunden. Der Bearbeitungsvorgang ist somit abgeschlossen.

Zur Entnahme des Werkstücks W wird dann wiederum der Schwenktisch 20 zusammen mit dem Werkstück W von seiner in Figur 6 gezeigten Arbeitsstellung in seine in Figur 3 gezeigte Bearbeitungsstellung zurückgeschwenkt und das Werkstück W kann leicht aus der Vorrichtung 1 entnommen werden.

## Patentansprüche

1. Vorrichtung zum Bearbeiten, insbesondere zum Stanzen und Verbinden eines Werkstücks, insbesondere von Kunststoffteilen für ein Kraftfahrzeug, wobei die Vorrichtung (1) mindestens ein Bearbeitungswerkzeug (10a-10d; 10a-10f) mit einem Oberwerkzeug (10a'-10d'; 10a'-10f') und einem mit dem Oberwerkzeug (10a'-10d'; 10a'-10f') zusammenwirkenden Unterwerkzeug (10a"-10d"; 10a"-10f"; 110) aufweist und das Bearbeitungswerkzeug (10a) ein Unterwerkzeug (10a" bzw. 110) mit mindestens zwei Bearbeitungseinheiten (14a, 14b bzw. 114a, 114b) besitzt, die zum Oberwerkzeug (10a') hin- und von diesem wegbewegbar sind, wobei das Unterwerkzeug (10a"; 110) mindestens eine Bewegungseinrichtung (15'; 115a, 115b) aufweist, durch welche mindestens die erste Bearbeitungseinheit (14a) und die zweite Bearbeitungseinheit (14b) wahlweise relativ zum Oberwerkzeug (10a') des Bearbeitungswerkzeugs (10a) bewegbar sind, wobei mindestens eine Bewegungseinrichtung (15'; 115a; 115b) einen Schlitten (15; 117; 124) aufweist, auf dessen Schlittentisch (15a; 117a; 124a) mindestens eine Bearbeitungseinheit (14a, 14b; 114a; 114b) angeordnet ist, und wobei der Schlittentisch (15a; 117a; 124a) des Schlittens (15; 117; 124) auf einer Schlittenführung (15b; 117b; 124b) verschiebbar angeordnet ist,
**dadurch gekennzeichnet, dass**
dass die Verschiebebewegung des Schlittens (15; 117; 124) im Wesentlichen in Richtung (Z) der Zustellbewegung des Unterwerkzeugs (10a") zu dem ihm zugeordneten Oberwerkzeug (10a') oder orthogonal zu dieser Richtung (Z) verläuft,
und
die Vorrichtung (1) einen Schwenktisch (20), der von einer Beladestellung in eine Arbeitsstellung schwenkbar ist, und eine Entnahmeeinrichtung (30) aufweist, durch welche das auf dem Schwenktisch (20) gelagerte Werkstück (W) in der Arbeitsstellung der Vorrichtung (1) aus dieser entnommen werden kann.

2. Vorrichtung nach Anspruch 1,
**dadurch gekennzeichnet, dass**
das oder diese Unterwerkzeuge (10a"-10d"; 10a"-101; 110) auf dem Schwenktisch (20) der Vorrichtung (1) angeordnet sind, und dass durch eine Schwenkbewegung des Schwenktisches (20) das in der Beladestellung des Schwenktisches (20) in die Vorrichtung (1) eingebrachte Werkstück (W) unter das oder die Oberwerkzeuge (10a'-10d', 10a'-10f') bringbar ist.

3. Vorrichtung nach Anspruch 1 oder 2,
**dadurch gekennzeichnet, dass**
das oder die Oberwerkzeuge (10a'-10d') auf mindestens einer stationär in der Vorrichtung (1) angeordneten Trägerplatte (4a, 4b) angeordnet sind, oder dass das oder die Oberwerkzeuge (10a'-10f') der Bearbeitungswerkzeuge (10a-10f) der Vorrichtung (1) von dem oder den Unterwerkzeugen (10a"-10f") wegbewegbar angeordnet sind und dass vorzugsweise das oder die Oberwerkzeuge (10a'-10f') auf einer Trägerplatte (34) angeordnet sind, welche von einer Hubeinrichtung (31) bewegbar ist.

4. Vorrichtung nach einem der vorhergehenden Ansprüche,
**dadurch gekennzeichnet, dass**
das Oberwerkzeug (10a') der Vorrichtung (1) einen Stanzkopf (11) und einen Stanzstempel (12) besitzt, und dass mindestens eine der Bearbeitungseinheiten (14a; 114a) eine Matrize (16) aufweist, welche mit dem Stanzstempel (12) des Oberwerkzeugs (10a) zusammenwirkt, und dass mindestens eine Bearbeitungseinheit (14b; 114b) des Unterwerkzeugs (10a") als eine Verbindungseinheit ausgeführt ist.

5. Vorrichtung nach einem der vorhergehenden Ansprüche,
**dadurch gekennzeichnet, dass**
durch die Bewegungseinrichtung (15') sowohl die erste und die zweite Bearbeitungseinheit (14a; 14b) unter dem zugehörigen Oberwerkzeug (10a'-10d'; 10a'-10f) wahlweise positionierbar ist.

6. Vorrichtung nach einem der vorhergehenden Ansprüche,
**dadurch gekennzeichnet, dass**
jeder Bearbeitungseinheit (114a; 114b) eine Bewegungseinrichtung (115a; 115b) zugeordnet ist, und dass die betreffende Bearbeitungseinheit (114a; 114b) durch eine Zustellbewegung der ihr zugeordneten Bewegungseinrichtung (115a; 115b) zum Oberwerkzeug (10a'-10d'; 10a'-10f) zustellbar ist.

7. Vorrichtung nach einem der vorhergehenden Ansprüche,
**dadurch gekennzeichnet, dass**
mindestens zwei Bearbeitungseinheiten (14a, 14b) auf dem Schlitten (15) der Bewegungseinrichtung (15') angeordnet sind.

8. Vorrichtung nach einem der vorhergehenden Ansprüche,
**dadurch gekennzeichnet, dass**
jeder Schlitten (117; 124) eine Bearbeitungseinheit (114a; 114b) trägt.

9. Vorrichtung nach einem der vorhergehenden Ansprüche,
**dadurch gekennzeichnet, dass**
das Bearbeitungswerkzeug (110) einen Rahmen (116) aufweist, welcher von der ersten Bewegungseinrichtung (115a) in der Richtung (Z) zum Oberwerkzeug hin (10a') verschiebbar ist.

10. Vorrichtung nach Anspruch 9,
**dadurch gekennzeichnet, dass**
der Rahmen (116) auf dem Schlittentisch (117a) des Schlittens (117) angeordnet ist.

11. Vorrichtung nach Anspruch 9 oder 10,
**dadurch gekennzeichnet, dass**
das Bearbeitungswerkzeug (110) ein Unterstützungselement (120) aufweist, das von einer Antriebseinrichtung (121) unter den Rahmen (116) verschiebbar ist.

12. Vorrichtung nach einem der vorhergehenden Ansprüche,
**dadurch gekennzeichnet, dass**
die zweite Bearbeitungseinheit (14b) im Rahmen (116) angeordnet ist.

13. Vorrichtung nach einem der vorhergehenden Ansprüche,
**dadurch gekennzeichnet, dass**
mindestens eine Bearbeitungseinheit (14b; 114b) eine Sonotrode (17; 117) aufweist.

## Claims

1. A device for working, in particular stamping and connecting a work piece, in particular plastic components for a motor vehicle,
wherein the device (1) includes at least one working tool (10a - 10d; 10a -10f) with an top tool (10a' - 10d"; 10a" -10f) and a bottom tool (10a" - 10d"; 10a" -10f"; 110) cooperating with the top tool (10a' - 10d'; 10a' - 10f') and the working tool (10a) includes a bottom tool (10a" or 110) with at least two working units (14a, 14b; or 114a, 114b) which are movable towards the top tool (10a') and away from the top tool (10a') wherein the bottom tool (10a"'; 110) includes at least one movement device (15'; 115a, 115b) by which at least the first working unit (14a) and the second working unit (14b) are optionally movable relative to the top tool (10a') of the working tool (10a),
wherein at least one movement device (15'; 115a; 115b) includes a slide (15; 117; 124) on whose slide table (15a, 117a; 124a) at least one working unit (14a, 14b; 114a; 114b) is arranged and wherein the slide table (15a; 117a; 124a) of the slide (15; 117, 124) is movably arranged on a slide support (15b; 117b; 124b) **characterized in that**
a linear displacement of the slide (15; 117; 124) is performed essentially in a direction (Z) of a feed movement of the bottom tool (10a') towards the associated upper tool (10a') or orthogonal to this direction (Z), and
the device (1) includes a pivot table (20) that is pivotable from a loading position into an operating position and which includes an extraction device (30) by which the work piece (W) supported on the pivot table (20) is removable from the device (1) in an operating position of the device (1).

2. The device according to claim 1,
**characterized in that**
the at least one bottom tool (10a" - 10d"; 10a" - 101; 110) is arranged on the pivot table (20) of the device (1) and a work piece (W) that is introduced into the device (1) by a pivot movement of the pivot table (20) in the loading position of the pivot table (20) is movable under the at least one upper tool (10a' - 10d', 10a' - 10f').

3. The device according to claim 1 or 2,
**characterized in that**
the at least one upper tool (10a'; 10d') is arranged on at least one carrier plate (4a, 4b) that is arranged in the device (1) in a stationary manner or that the at least one upper tool (10a' - 10f') of the working tools (10a - 10f) of the device (1) are arranged so that they are movable away from the at least one lower tool (10a" - 10f") and that the at least one upper tool (10a' - 10f') is advantageously arranged on a carrier plate (34) that is movable by a lift device (31).

4. The device according to one of the preceding claims,
**characterized in that**
the upper tool (10a') of the device (1) includes a stamping head (11) and stamping plunger (12) and at least one of the working units (14a; 114a) includes a stamping die (16) which cooperates with a stamping plunger (12) of the upper tool (10a) and at least one working unit (14b; 114b) of the lower tool (10a") is configured as a connection unit.

5. The device according to one of the preceding claims,
**characterized in that**
the movement arrangement (15') is configured to optionally position the first and the second working unit (14a; 14b) below an associated upper tool (10a' - 10d'; 10a' - 10f).

6. The device according to one of the preceding claims,
**characterized in that**
each working unit (114a; 114b) is associated with a movement arrangement (115a; 115b) and a respective processing unit (114a; 114b) is feedable by a feed movement of an associated movement arrangement (115a; 115b) relative to the upper tool (10a' -10d'; 10a' - 10f).

7. The device according to one of the preceding claims,
**characterized in that**
at least two working units (14a, 14b) are arranged on the slide (15) of the movement arrangement (15').

8. The device according to one of the preceding claims,
**characterized in that**
each slide (117; 124) supports a working unit (114a; 114b).

9. The device according to one of the preceding claims,
**characterized in that**
the working tool (110) includes a frame (116) that is movable by the first movement arrangement (115a) in the direction (Z) towards the upper tool (10a').

10. The device according to claim 9,
**characterized in that**
a frame (116) is arranged on the slide table (117a) of the slide (117).

11. The device according to claim 9 or 10,
**characterized in that**
the working tool (110) includes a support element (120) that is movable by a drive device (121) below the frame (116).

12. The device according to one of the preceding claims,
**characterized in that**
the second working unit (14b) is arranged in the frame (116).

13. The device according to one of the preceding claims,
**characterized in that**
at least one working unit (14b; 114b) includes a sonotrode (17; 117).

## Revendications

1. Dispositif pour l'usinage, en particulier la découpe et la connexion d'une pièce d'usinage, en particulier de pièces en matière plastique pour un véhicule automobile, le dispositif (1) comprenant au moins un outil d'usinage (10a-10d ; 10a-10f), avec un outil supérieur (10a'-10d'; 10a'10f') et un outil inférieur (10a"-10d" ; 10a"-10f" ; 110) coopérant avec l'outil supérieur (10a'-10d' ; 10a'-10f'), et l'outil d'usinage (10a) possédant un outil inférieur (10a" resp. 110) avec au moins deux unités d'usinage (14a, 14b, resp. 114a, 114b), qui sont mobiles en va et vient par rapport à l'outil supérieur (10a'), l'outil inférieur (10a"; 110), présentant au moins un dispositif de déplacement (15" ; 115a, 115b), par lequel au moins la première unité d'usinage (14a) et la seconde unité d'usinage (14b) sont mobiles au choix par rapport à l'outil supérieur (10a') de l'outil d'usinage (10a), au moins un dispositif de déplacement (15" ; 115a, 115b) présentant un chariot (15 ; 117 ; 124), sur la table (15a ; 117a; 124a) duquel est disposée au moins une unité d'usinage (14a, 14; 114; 114a) et la table de chariot (15a ; 117a ; 124a) du chariot (15 ; 117 ; 124) étant disposée sur un guide de chariot (15b ; 117a ; 124b) de manière mobile,
**caractérisé en ce**
**que** le mouvement de translation du chariot (15 ; 117 ; 124) s'étend sensiblement dans la direction (Z) du mouvement d'approche de l'outil inférieur (10a") vers l'outil supérieur (10a') qui lui est associé ou orthogonalement à cette direction (Z),
et le dispositif (1) présente une table pivotante (20) qui bascule d'une position de chargement dans une position de travail (30) qui permet de retirer du dispositif la pièce d'usinage (W) stockée sur la table pivotante (20) dans la position de travail du dispositif (1).

2. Dispositif selon la revendication 1,
**caractérisé en ce**
**que** le ou les outils inférieurs (10a"-10d" ; 10a"-101 ; 110) sont disposés sur la table pivotante (20) du dispositif (1) et **en ce que** par un mouvement de bascule de la table pivotante (20), la pièce d'usinage (W), placée en position de chargement de la table pivotante (20), introduite dans le dispositif (1), peut être amenée en dessous du ou des outils supérieurs (10a'-10d' ; 10a'10f').

3. Dispositif selon la revendication 1 ou 2,
**caractérisé en ce**
**que** le ou les outils supérieurs (10a'-10d') sont disposés sur au moins une plaque support (4a, 4b) disposée stationnairement dans le dispositif (1), ou que le ou les outils supérieurs (10a'-10f') des outils d'usinage (10a"-10f") sont disposés mobiles en va et vient par rapport à l'outil ou aux outils inférieurs (10a"-10f") et que de préférence le ou les outils supérieurs (10a'-10f') sont disposés sur une plaque support (34) qui est mobile par un dispositif de levage (31).

4. Dispositif selon l'une des revendications précédentes,
**caractérisé en ce**
**que** l'outil supérieur (10a') du dispositif (1) possède une tête de découpe (11) et un poinçon de découpe (12) et **en ce qu'**au moins l'une des unités d'usinage (14a ; 114a) présente une matrice (16) qui coopère avec le poinçon de découpe (12) de l'outil supérieur (10a), et **en ce qu'**au moins une unité d'usinage (14b ; 114b) de l'outil supérieur (10a") est réalisée comme une unité de connexion.

5. Dispositif selon l'une des revendications précédentes,
**caractérisé en ce**
**que** le dispositif de déplacement (15') positionne au choix aussi bien la première unité que la seconde unité d'usinage (14ba ; 14b) en dessous de l'outil supérieur associé (10a'-10d'; 10a'10f').

6. Dispositif selon l'une des revendications précédentes,
**caractérisé en ce**
**que** chaque unité d'usinage (114a ; 114b) est associée à un dispositif de déplacement (115a ; 115b) et **en ce que** l'unité d'usinage concernée (114a ; 114b) peut être amené à l'outil supérieur (10a'-10d' ; 10a'10f').

7. Dispositif selon l'une des revendications précédentes,
**caractérisé en ce**
**qu'**au moins deux unités d'usinage (14a, 14b) sont disposées sur le chariot (15) du dispositif de déplacement (15').

8. Dispositif selon l'une des revendications précédentes,
**caractérisé en ce**
**que** chaque chariot (117 ; 124) porte une unité de déplacement (114a ; 114b).

9. Dispositif selon l'une des revendications précédentes,
**caractérisé en ce**
**que** l'outil d'usinage (110) présente un cadre (116) qui est mobile en translation par le premier dispositif de déplacement (115a) dans la direction (Z) vers l'outil supérieur (10a').

10. Dispositif selon la revendication 9,
**caractérisé en ce**
**que** le cadre (116) est disposé sur la table (117a) du chariot (117).

11. Dispositif selon la revendication 9 ou 10,
**caractérisé en ce**
**que** l'outil d'usinage (110) présente un élément de soutien (120) qui est mobile en translation par un dispositif d'entraînement (121) en dessous du cadre (116).

12. Dispositif selon l'une des revendications précédentes,
**caractérisé en ce**
**que** la seconde unité d'usinage (14b) est disposée dans le cadre (116).

13. Dispositif selon l'une des revendications précédentes,
**caractérisé en ce**
**qu'**au moins une unité d'usinage (14b ; 114B) est une sonotrode (117).
